# EUROPEAN PATENT SPECIFICATION

(11) **EP 1 505 545 B1**
(45) Date of publication and mention of the grant of the patent: **10.11.2010**
(21) Application number: 04254472.6
(22) Date of filing: 27.07.2004
(51) Int. Cl.: G06T 11/20, G06F 15/02

(54) **Function drawing in polar plan using a calculator**
Verfahren und Einrichtung zur Anzeige einer Funktion in einem Polarplan mit Hilfe eines Rechners
Méthode et dispositif pour la visualisation d'une fonction dans le plan polaire au moyen d'un calculateur

(30) Priority: 08.08.2003 US 636781
(43) Date of publication of application: 09.02.2005
(73) Proprietor: HEWLETT-PACKARD DEVELOPMENT COMPANY, L.P., Houston, TX 77070 (US)
(72) Inventor: De Brébisson, Cyrille, Boise, Idaho 83702 (US)
(74) Representative: Jehan, Robert

(56) References cited:
- EP-A- 0 660 244
- ANONYMOUS: "Polar Coordinates" INTERNET ARTICLE, [Online] 13 December 2001 (2001-12-13), XP002399722 Retrieved from the Internet: URL:http://web.archive.org/web/20011213145 010/http://www.nucalc.com/Examples/Example 16.html> [retrieved on 2006-09-06]

## Description

This application is related to each of the following patent applications: "Graphical Calculator User Interface for Function Drawing" (US patent application no. 10/636,752; European patent application no. RJ/N15755); "Input and Evaluation of Fractions Using a Calculator" (US patent application no. 10/636,785; European application no. RJ/N15753); "Previous Calculation Reuse in a Calculator" (US patent application no. 10/636,778; European patent application no. RJ/N15756); "Graphical Calculator" (US patent application no. 10/636,780; European application no. RJ/N15752), each assigned to the present assignee, all of which are hereby incorporated by reference in their entirety. The United States patent applications were all filed on 8 August 2003; the European applications are being filed on the same day as the present application.

The present invention relates to a method of and apparatus for expression display and animation of expression display in polar plan using a calculator.

A hand-held calculator is an important and useful device. Similar to a computer, the hand-held calculator has a processor, a memory, a display, and an input device; however, there are important distinguishing differences between the hand-held calculator and the computer.

The hand-held calculator is a specialized device and not a general purpose device, as is true of a computer. Because of this specialization, typically the handheld calculator costs less, has a longer useful lifespan, and is more reliable and more portable than the computer.

Whereas a general purpose computer is capable of executing many different programs, a hand-held calculator typically executes a single program and, less frequently, supports execution of user-created programs. Normally, a hand-held calculator supports addition, subtraction, multiplication, and division of numbers, either integer-based or decimal-based, entered by a user and displays the results on a built-in display.

A graphical calculator is a further specialized version of a hand-held calculator having a display which is typically larger than a regular hand-held calculator display in order to enable graph output. In many instances, graphical calculator displays are liquid crystal displays for more accurate representation and enhanced readability of a graph output.

A graphical calculator is able to display a graph of a specific expression, e.g. a sine wave representing a sinusoidal function, entered by a user. Disadvantageously, graphical capabilities on hand-held calculators are only available as part of expensive and complex, "high end" scientific calculators. These graphical calculators are more expensive than other calculators, typically costing hundreds of dollars. These graphical calculators are more complicated to operate than other calculators because of the large amount of functionality incorporated therein.

The increased functionality has required a corresponding increase in the number of keys required for manipulating and using the calculator. For example, currently available graphical calculators have approximately fifty (50) keys including two (2) shift or modifier keys for a user to manipulate, e.g. a Texas Instruments (TI) 83 plus calculator has 51 keys and two (2) shift keys which can be used concurrently, enabling up to four functions to be assigned per the 51 remaining keys, and a Hewlett-Packard (HP) 48G+/GX calculator has 49 keys and three (3) shift keys, enabling up six functions to be assigned per the remaining 49 keys.

Additionally, and in conjunction with the larger number of keys present, a user must contend with different modes of operation of the current graphical calculator. Different modes of operation, accessible via specific keys and/or key sequences, must be utilized in order to access specific calculator functionality, e.g. a graphical calculator may include a fraction mode, a decimal mode, a binary mode, a hexadecimal mode, a finance mode, a statistics mode, and a graph mode.

Further, expression input requires increasingly complicated key manipulations and combinations. For example, in order to graph an expression, there are typically three combinations to be entered: a mode specifying combination, an expression entry combination, and a completion combination. The mode specifying combination may include manipulation of a graph key to instruct the calculator to graph the following expression entry. The expression entry combination may include manipulation of multiple keys to input the expression to be graphed and the completion combination includes manipulation of a key, e.g. an enter key, to instruct the calculator to perform the preceding operations, i.e. graph the entered expression.

Requiring a user to manipulate multiple keys increases the need for learning, the possibility of error and may lead to frustration on the part of the user. Also, requiring additional key presses by a user requires more time and slows the entry and use of the calculator by the user. The addition of multiple modes, complicated expression input combinations, and ever-increasing numbers of keys results in a very complicated device.

As further evidence of increasing complexity, the user manual for a currently available hand-held graphical calculator has dramatically increased in size in order to fully explain the use of the calculator. For example, the above-cited TI-83 plus calculator manual includes 269 pages and the HP 48G+/GX calculator manual includes 506 pages. These are very long documents which are typically not read by users. Further, users are likely to be deterred from reading the manual because of the imposing size of the manual.

Graphical calculators are very popular and effective educational aides. School students using graphical calculators can easily visualize complex functions; however, the complexity and cost of currently available graphical calculators deters many students and schools from making a purchase. Purchasers are dissuaded by the size of the manual, multiple modes of operation, and the number of keys and key combinations required for inputting expressions.

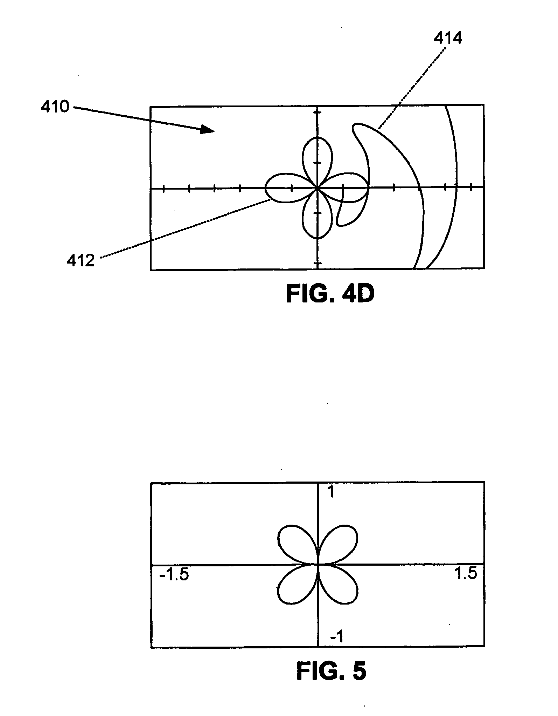

Graphical representations of a function is an effective teaching method. Prior approaches for teaching functions using polar coordinates and a polar plan representation include lectures and drawing functions using a hand drawn approach, i.e., pen and paper, chalk and blackboard, or marker and whiteboard. Further, prior approaches to display graphical representations of functions on calculators have included use of a polar coordinate system. However, traditionally the graphical representation has been limited to display of the function, i.e., graphing of the function, by varying the angle of the function 0 and graphing the point defined by the radius and the angle [theta] on a polar plan where the radius R is determined by the input function, e.g., R=sin([theta]). A graphical representation of the function R=sin([theta]) in polar coordinates is illustrated in Figure 5.

EP0660244 discloses a graph display apparatus.

The present invention seeks to provide an improved calculator and preferably a calculator-based implementation for drawing polar plan representations wherein the graphing of the function is based on varying the radius of which the inventor is currently aware.

The preferred embodiments can provide a method of and apparatus for expression display by varying the angle of a user-entered expression in polar plan using a calculator.

They can also provide a method of and apparatus for animated expression display in polar plan using a calculator.

According to an aspect of the present invention, there is provided a method according to claim 1.

According to another aspect of the present invention, there is provided a calculator according to claim 2.

Embodiments of the present invention are described below, by way of example only, with reference to the accompanying drawings, in which:
Figure 1 is a front face view of a graphical calculator according to an embodiment of the present invention;
Figure 2 is a high level block diagram of a graphical calculator according to an embodiment of the present invention; and
Figure 3 illustrates a menu displayed on a display of the graphical calculator of Figure 1 according to an embodiment of the present invention;
Figures 4a-4d illustrate input of a user-entered expression on a calculator and display of a graphical representation of the user-entered expression on the calculator of Figure 1 according to an embodiment of the present invention;
Figure 5 illustrates a graph of a function by varying the angle value in polar coordinates;
Figures 6a-6ww illustrate steps in a graphical animation 6f graphing the function cos(2θ) according to an embodiment of the present invention; and
Figures 7a-7o illustrate steps in a graphical animation of graphing the function cos(2R) according to an embodiment of the present invention.

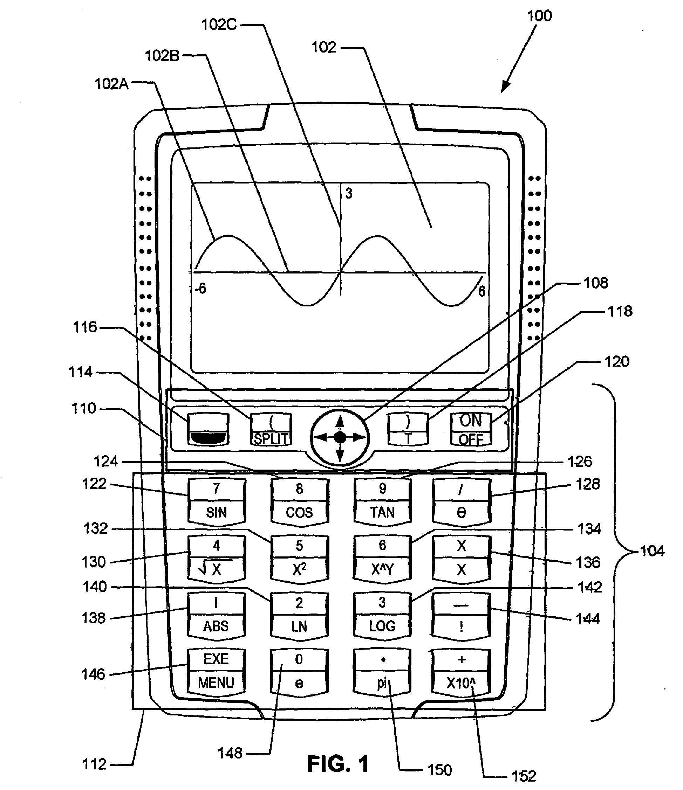

Figure 1 is a front face view of a graphical calculator 100 according to an embodiment of the present invention. Advantageously, an embodiment according to the present invention enables use of a calculator for display of graphical representations of user-entered expressions using a polar coordinate system based on varying the radius term of the expression. Further advantageously, an embodiment according to the present invention enables use of a calculator for animated display of a user-entered expression using a calculator.

Calculator 100 includes a display 102 and a primarily key-based input area 104 set in a front face 106. Although front face 106 is depicted as a rounded rectangle, it is to be understood that the front face may be manufactured to be any of a number of different shapes. Further, although a specific number, type and configuration of input mechanisms are described below, it is to be understood that variations in the number, type, and configuration of input mechanisms may be found in different embodiments of the present invention.

Display 102 is a rectangular liquid crystal display (LCD) which is 96 pixels wide and 64 pixels in height. As shown in figure 1, display 102 displays a sine wave 102A on a graph having an X axis 102B and a Y axis 102C. Input area 104 includes four keys and one directional input device 108 in a row 110 and 16 keys arranged in a four by four grid 112. Although a four by four grid is depicted and described, it is to be understood that the input area keys may be arranged in different configurations.

Directional input device 108 is used to navigate menus and perform information input, recall, and editing. Directional input device 108 may be manipulated by the user to input at least four directions, i.e. up, down, left, and right to calculator 100. Input of the left arrow of directional input device 108 inputs a move left command to processor 204 thereby moving the current cursor position on display 102 to the left one position. Input of the right arrow of directional input device 108 inputs a move right command to processor 204 thereby moving the current cursor position on display 102 to the right one position.

A secondary function of directional input device 108, accessible via use of shift key 114 as described below, is editing an expression on display 102. The input of shift key 114 in conjunction with or prior to left arrow of directional input device 108 inputs a backspace command to processor 204 thereby deleting the character to the left of the current cursor position on display 102. The input of shift key 114 in conjunction with or prior to right arrow of directional input device 108 inputs a delete command to processor 204 thereby deleting the character to the right of the current cursor position on display 102.

The four remaining keys in row 110 are shift key 114, open parenthesis key 116, close parenthesis key 118, and power key 120.

Shift key 114 is used to access a second set of functions, i.e. secondary functions, assigned to the remaining keys on calculator 100. For example, user activating power key 120 turns on calculator 100; however, activation of power key 120 subsequent to activation of shift key 114 turns off the calculator. In a similar fashion, each of the remaining keys of calculator 100 has an assigned secondary function.

Open parenthesis key 116 inputs a beginning parenthesis in a user-entered expression. The secondary function of open parenthesis key 116 is to input a command causing calculator 100 to split a graphical output on display 102 such that one half of the display is a graph and the other half is numerical information related to the graph displayed.

Close parenthesis key 118 inputs an ending parenthesis in a user-entered expression. The secondary function of close parenthesis key 118 is to input a T variable in a user-entered expression.

Power key 120 turns on calculator 100 and, as described above, the secondary function of power key 120 is to turn off calculator 100. Additionally, power key 120 operates as a clear key after calculator 100 is turned on, i.e. the power key may be used to clear the displayed expression on display 102. Manipulation of shift key 114 followed by right arrow of directional input device 108 deletes input characters to the right of the current input position and manipulation of shift key 114 followed by left arrow of directional input device 108 deletes input characters to the left of the current input position.

Beginning in the upper left comer of four by four grid 112, the description of the remaining keys is now provided in a row, column order.

Row 1, column 1 key 122, i.e. the seven key, inputs a seven (7) value in user-entered expression and has a secondary function of inputting a sin function in a user-entered expression. Row 1, column 2 key 124, i.e. the eight key, inputs an eight (8) value in a user-entered expression and has a secondary function of inputting a cos function in a user-entered expression. Row 1. column 3 key 126, i.e. the nine key inputs a nine (9) value in a user-entered expression and has a secondary function of inputting a tan function in a user-entered expression. Row 1, column 4 key 128, i.e. the division key, inputs a division (/) function in a user-entered expression and has a secondary function of inputting a theta (θ) variable in a user-entered expression. Further, as described in detail below, the division key 128 is used to input a fractional value to calculator 100. Division key 128 is input between input of the digits of the numerator and denominator of a fraction.

Row 2, column 1 key 130, i.e. the four key, inputs a four (4) value in a user-entered expression and has a secondary function of inputting a square root function in a user-entered expression. Row 2, column 2 key 132, i.e. the five key, inputs a five-(5) value in a user entered expression and has a secondary function of inputting a squared function, i.e. raising a value to the second power, in a user-entered expression. Row 2, column 3 key 134, i.e. the six key, inputs a six (6) value in a user-entered expression and has a secondary function of inputting a value raised to the power of a subsequently entered value function, i.e. X raised to the power of Y, in a user-entered expression. Row 2, column 4 key 136, i.e. the multiplication key, inputs a multiplication (*) function in a user-entered expression and has a secondary function of inputting an X variable in a user-entered expression.

Row 3, column 1 key 138, i.e. the one key, inputs a one (1) value in a user-entered expression and has a secondary function of inputting an absolute value function in a user-entered expression. Row 3, column 2 key 140, i.e. the 2 key, inputs a two (2) value in a user-entered expression and has a secondary function of inputting a natural logarithm function in a user-entered expression. Row 3, column 3 key 142, i.e. the three key, inputs a three (3) value in a user-entered expression and has a secondary function of inputting eight logarithm function in a user-entered expression. Row 3, column 4 key 144, i.e. the minus key, inputs a subtraction (-) function in a user-entered expression and has a secondary function of inputting a NOT function in a user-entered expression.

Row 4, column 1 key 146, i.e. the execute key, inputs an execute command to calculator 100 and has a secondary function of inputting a menu command to the calculator. Row 4, column 2 key 148, i.e. the zero key, inputs a zero (0) value in a user-entered expression and has a secondary function of inputting an e value in a user-entered expression. Row 4, column 3 key 150, i.e. the dot key, inputs a decimal point in a value entry and has a secondary function of inputting a pi constant value in a user-entered expression. Row 4, column 4 key 152, of i.e. the plus key, inputs an addition (+) function in a user-entered expression and has a secondary function of inputting a times ten to the power of a subsequently entered value, i.e. "*10^Y" in a user-entered expression.

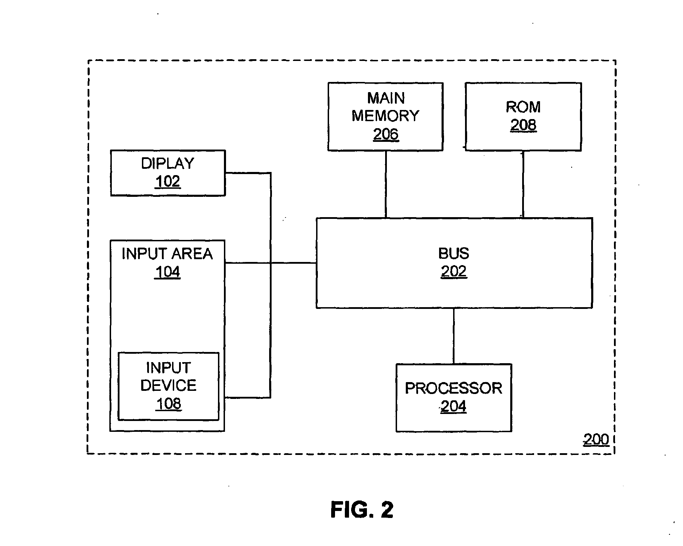

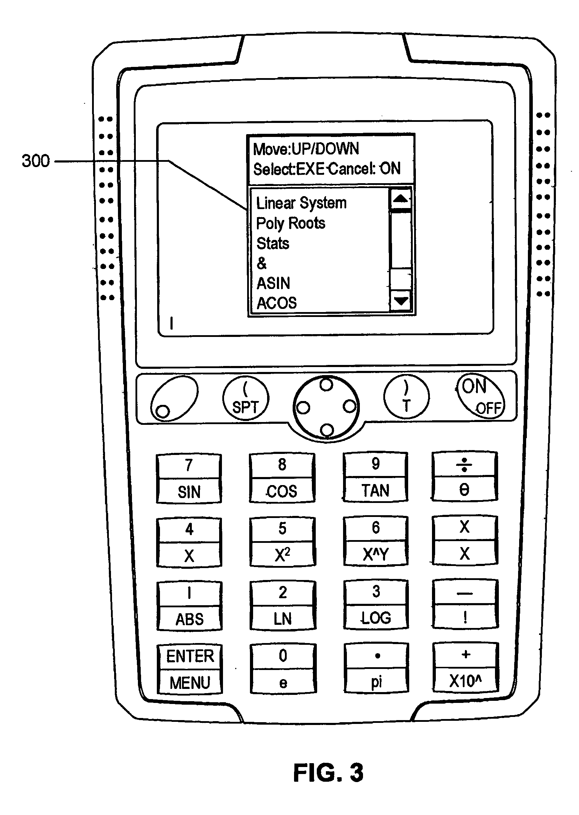

With respect to the secondary function of the execute key 146 described above, after receipt of a menu command input by a user, processor 204 (described below in conjunction with Figure 2) drives display 102 to display a menu 300 (Figure 3). The user manipulates directional input device 108 up arrow and/or down arrow to cause the highlighted menu item to move up/down one item. After the user-desired menu item is highlighted, the user manipulates execute key 146 (primary function) to input the highlighted menu item. If the user manipulates the power key 120, no input to processor 204 is generated and the menu 300 is no longer displayed on display 102.

Figure 2 is a block diagram illustrating an exemplary calculator 100 upon which an embodiment of the invention may be implemented.

Calculator 100 includes a bus 202 or other communication mechanism for communicating information, and a processor 204 coupled with the bus 202 for processing information. In one particular embodiment, processor 204 is a 16 bit processor. Calculator 100 also includes a main memory 206, such as a random access memory (RAM) or other dynamic storage device, coupled to the bus 202 for storing data and expressions according to an embodiment of the present invention and instructions to be executed by processor 204. Main memory 206 also may be used for storing temporary variables or other intermediate information during execution of instructions to be executed by processor 204. In one particular embodiment, main memory 206 is an 8 Kilobyte RAM. Further it is to be understood that in alternate embodiments, the components of calculator 100 may be combined onto a single integrated circuit, e.g. processor 204 and main memory 206 may be combined on a single "system on a chip."

Calculator 100 further includes a read only memory (ROM) 208 or other static storage device coupled to the bus 202 for storing static information and instructions for the processor 204. In one particular embodiment, ROM 208 is a 128 Kilobyte ROM.

Calculator 100 may be coupled via the bus 202 to a display 102, such as the above-described 96 * 64 pixel LCD, for displaying an interface to a user. An input area 104, as described above with reference to Figure 1, is coupled to the bus 202 for communicating information, e.g. user-entered expressions and values, and command inputs to the processor 204. An input device 108, as described above with respect to Figure 1, is part of input area 104 and communicates direction information and command selections to processor 204 and controls cursor movement on the display 102. This input device typically has two degrees of freedom in two axes, a first axis (e.g., x) and a second axis (e.g., y) allowing the device to specify positions in a plane.

The invention is related to the use of calculator 100, such as the depicted calculator of Figure 2, to input and apply operations, e.g. expressions, to data and graph the results of operations by driving display 102. According to one embodiment of the invention, data is stored and accessed from main memory 206 by calculator 200 in response to processor 204 executing sequences of instructions contained in main memory 206 in response to input received via input area 104. A user interacts with the calculator 100 via a user interface displayed (as described below) on display 102.

Execution of the sequences of instructions contained in the main memory 206 causes the processor 204 to perform the process steps described below. In alternative embodiments, hard-wired circuitry may be used in place of or in combination with computer software instructions to implement the invention. Thus, embodiments of the invention are not limited to any specific combination of hardware circuitry and software.

Figure 3 illustrates a menu 300 displayed on display 102 according to an embodiment of the present invention. As described above, menu 300 is displayed in response to the user manipulating the secondary function, i.e. menu, of execute key 146. Menu 300 includes additional expressions able to be selected and input by a user (in the manner described above) to processor 204.

In addition to enabling the display of a graphical representation of user-entered expressions in a polar coordinate system, according to an embodiment of the present invention, user-entered expressions are able to be displayed varying based on a radius variable. Typically, functions drawn on a polar coordinate system as described above, were drawn using θ as the angle varying from 0 to 2 pi and R as dependent upon θ based on the user-entered expression and representing the distance of a given point to the origin of the polar coordinate system, i.e. R=f(θ).

In an embodiment according to the present invention, polar functions are graphically displayed in polar coordinates on display 102 using the form θ=f(R), i.e., varying the radius of the function. In order to display the function R=f(θ), the graphical representation is displayed by graphing the values (θ, R=f(θ)) on the polar coordinate system.

In a further embodiment, an animated display of the graphing process of graphing the function in polar plan view is achieved by repeatedly drawing a line from the origin (0, 0) to the destination point (θ,θ=f(R)) as the value of R is incremented from a given starting value, e.g., zero (0). The resulting animation displays, i.e., graphs, the input expression with a sweeping style on display 102.

In a still further embodiment, an animated display of the graphing process of graphing the function in polar plan view is achieved by repeatedly drawing a circle having an origin at a given starting point, e.g., (0, 0), and a radius equal to the value R and a point on the perimeter of the circle at an angle θ. The user-entered expression determines the radius R and the angle θ. The angle θ varies from a given starting value, e.g., zero (0), as the circles are drawn.

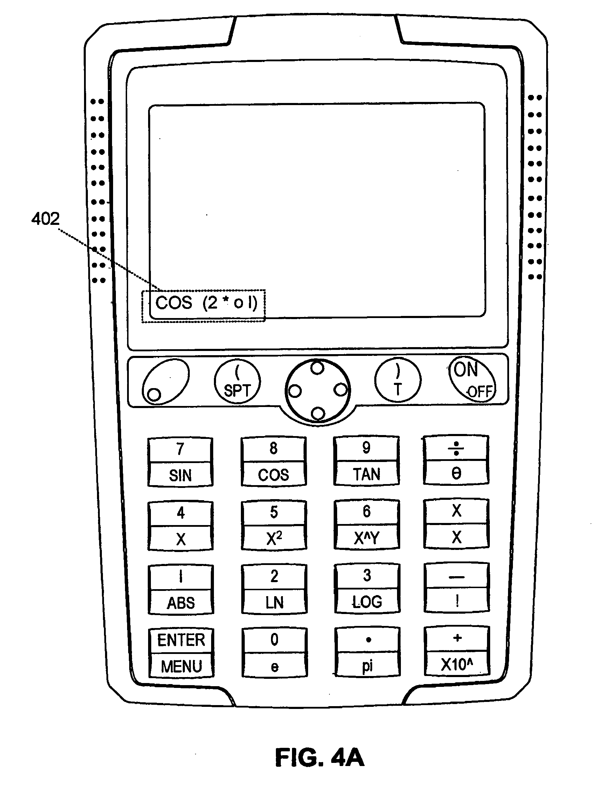

According to an embodiment of the present invention, a user is able to input and display expressions in a polar coordinate system and a polar plan view using a calculator. With reference to Figure 4a, display 102 displays a user input of a mathematical expression 402, i.e. "cos(θ)", by sequential manipulation of the shift key 114, the eight key 124, the shift key 114, and the division key 128. The upright bar symbol, "|", at the end of mathematical expression 402 indicates the cursor position to the user during editing/input of the user-entered expression, i.e. mathematical expression 402.

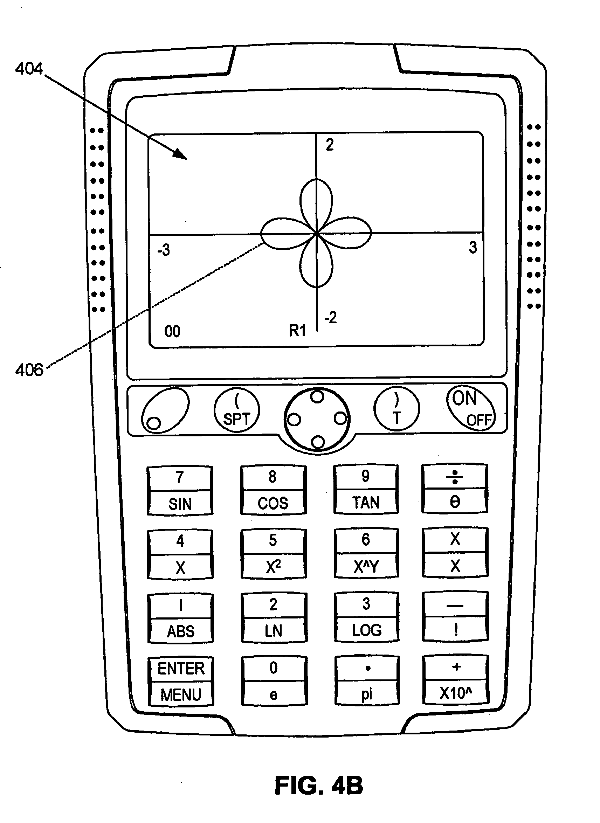

After the user manipulates the execute key 146, processor 204 evaluates the input mathematical expression 402 and drives display 102 to display the result 404 i.e. a graphical representation of a cosine function 406 varying based on the radius R in a two dimensional polar coordinate system (i.e., a four petal flower graph) to the user as depicted in Figure 4b. Advantageously, as described in applicant's co-pending application titled "Graphical Calculator User Interface for Function Drawing", the user need only input an expression to be graphed to processor 204 of calculator 100 and the processor drives display 102 to graph the mathematical expression. The user is not required to enter a graphing mode or manipulate a graphing key.

Further advantageously, the user is able to graph expressions using a polar coordinate system without requiring special modes or the manipulation of a graphing key.

As described in greater detail in the aforementioned application, the user is able to display either cosine wave 406 or cosine wave 406 and a listing of select points on cosine wave 406. Further, the user is able to zoom in and out, increasing or decreasing the scale of the displayed graph, shift the coordinate system to the right, left, upward, or downward as described, and manipulate directional input device 108 to move a cursor position along the displayed graphical representation of the user-entered mathematical expression.

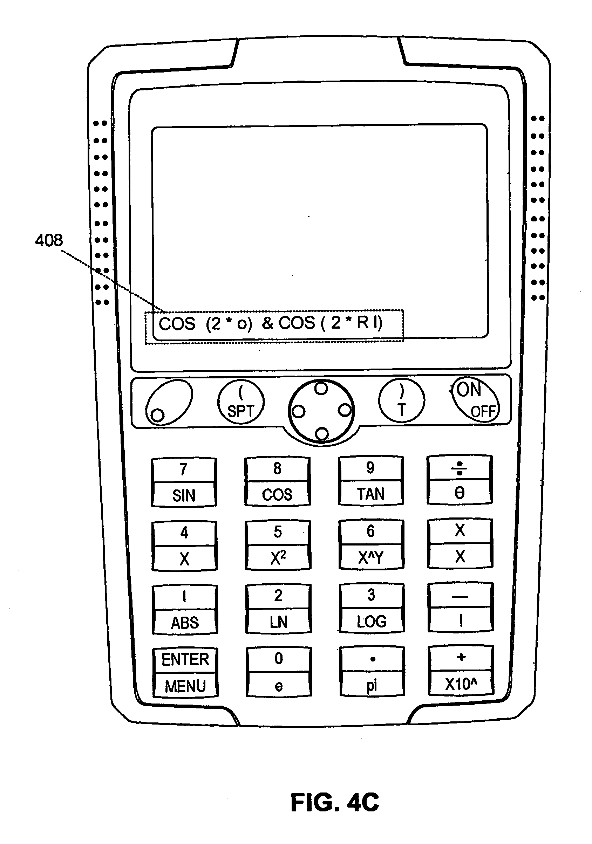

In a further embodiment, the user is able to manipulate calculator 100 to display a graphical representation of a user-entered expression varying based on the radius R and a user-entered expression varying based on the angle θ in a polar plan view of a polar coordinate system. With reference to Figure 4c, display 102 displays a user input of a mathematical expression 408 including two cosine expressions, i.e. "cos(2θ) & cos(2R)." The first part of the expression, i.e., cos(2θ), varies based on the value of the angle θ, while the second part of the expression, i.e., cos(2R), varies based on the value of the radius R. By sequential manipulation of the shift key 114, the eight key 124, the two key 140, the multiplication key 136, the shift key 114 and the division key 128, the user inputs the first part of the expression. The second part of the expression 408 is entered by sequential manipulation of the shift key 114, the eight key 124, the two key 140, the multiplication key 136, shift key 114, the execute key 146, highlighting the R expression in the displayed menu 300 and manipulation of the execute key 146. The upright bar symbol, "|", at the end of mathematical expression 408 indicates the cursor position to the user during editing/input of the user-entered expression, i.e. mathematical expression 408.

After the user manipulates the execute key 146, processor 204 evaluates the input mathematical expression 408 and drives display 102 to display the result 410, i.e., a graphical representation of a cosine wave 412 varying based on the angle θ in a polar coordinate system (i.e., the four petal flower graph) and a graphical representation of a cosine wave 414 varying based on the radius R in a polar coordinate system (i.e., the sinusoid to the right of the cosine wave 412) to the user depicted in Figure 4d.

Because both user-entered expressions use the same coordinate system, both expressions may be displayed on display 102 at the same time as illustrated in Figure 4d. Advantageously, the user is able to graph expressions varying based on either the angle θ or the radius R without requiring special modes or the manipulation of a graphing key. In an alternate embodiment, the user may manipulate input area 104 and input an expression varying solely based on the radius R, e.g., "cos(2R)", to obtain a graphical representation of the user-entered expression.

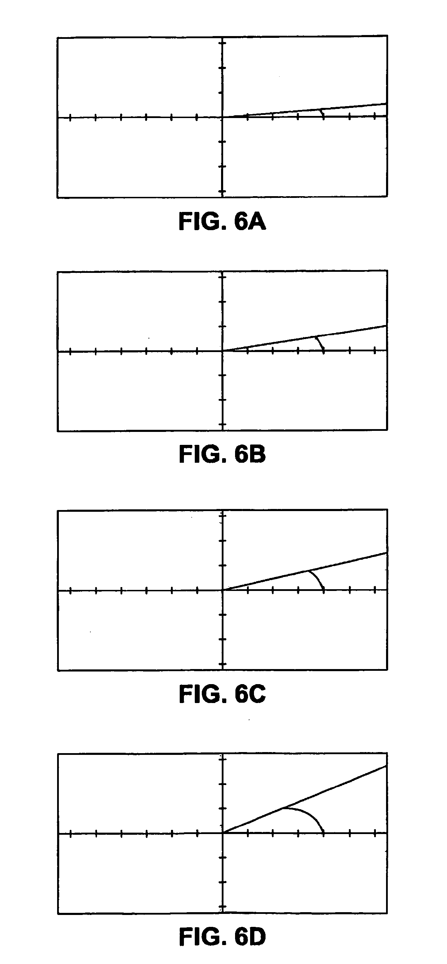

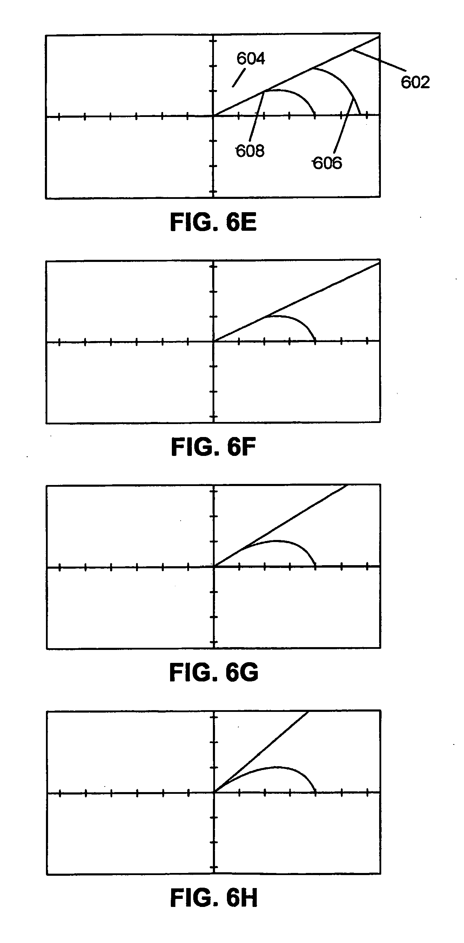

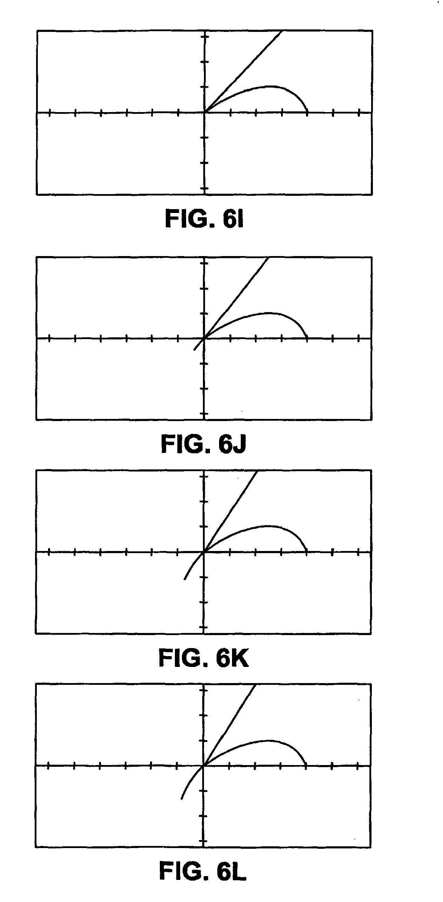

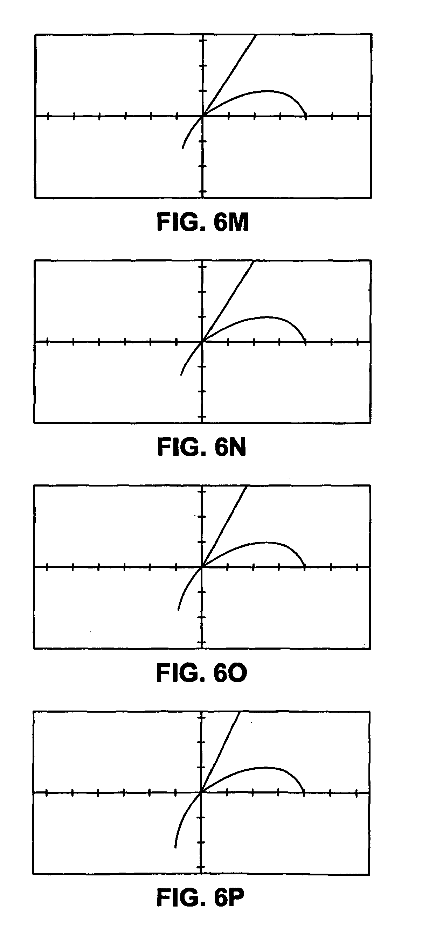

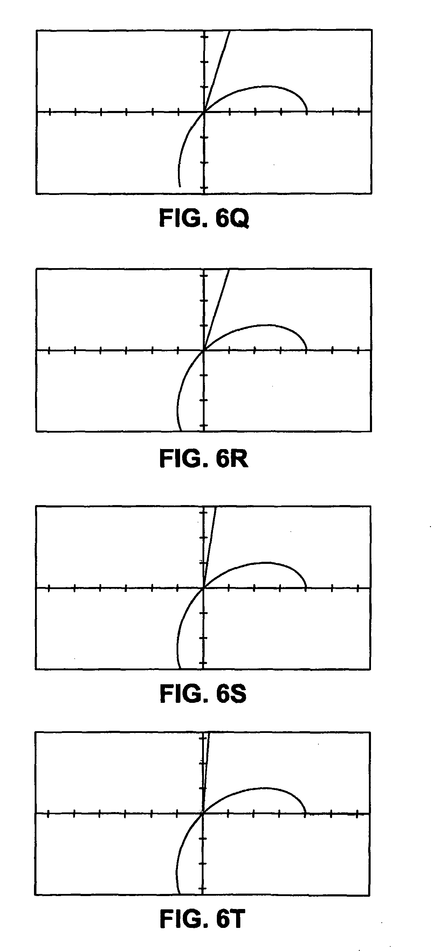

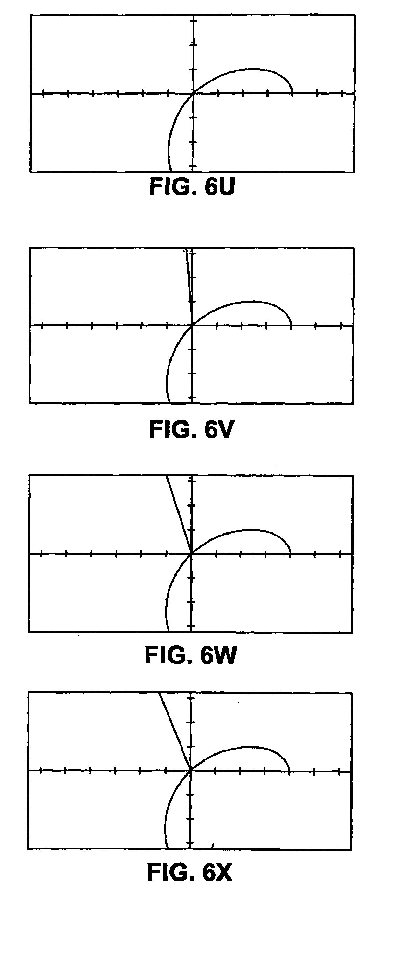

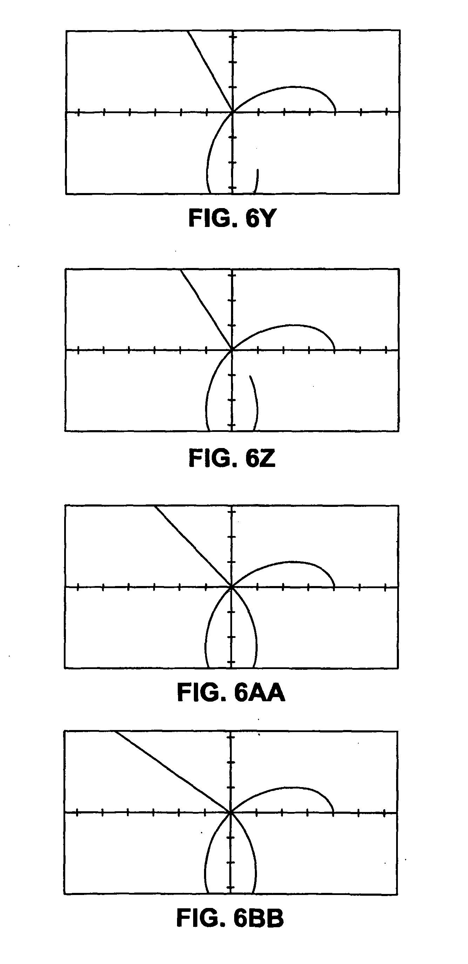

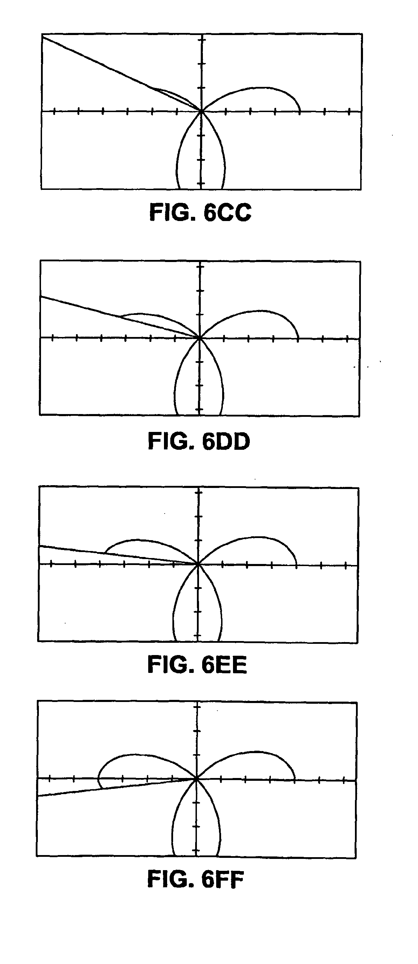

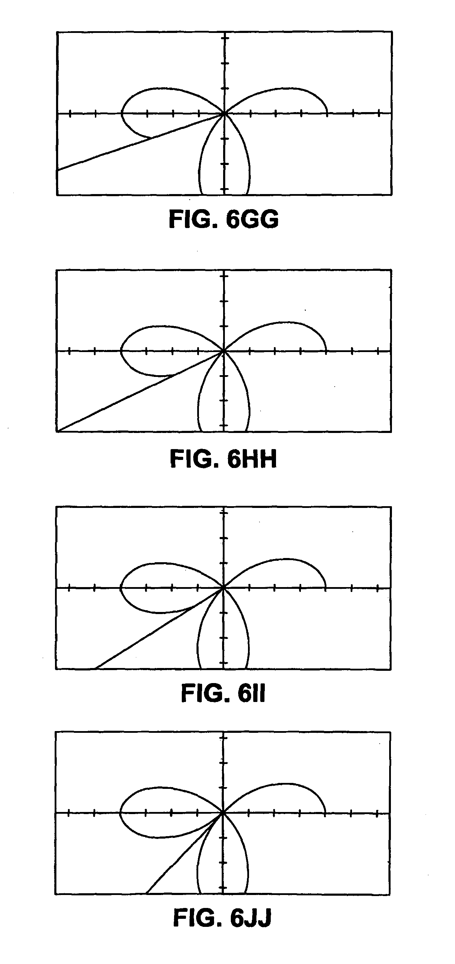

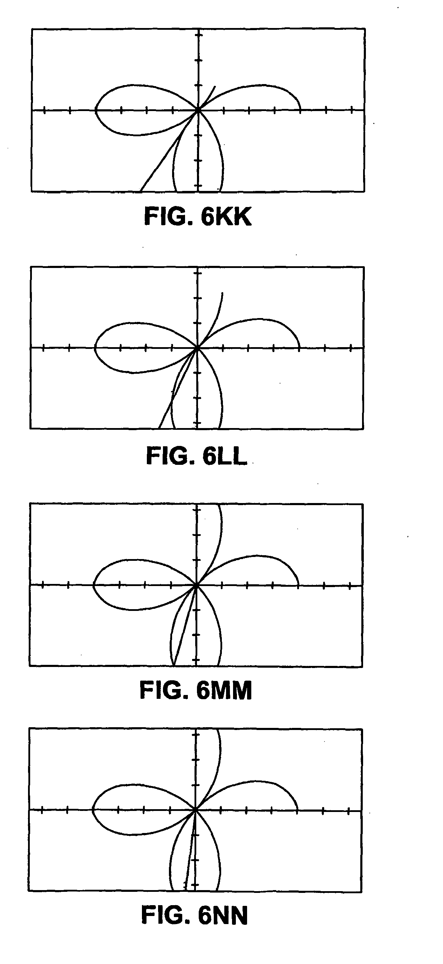

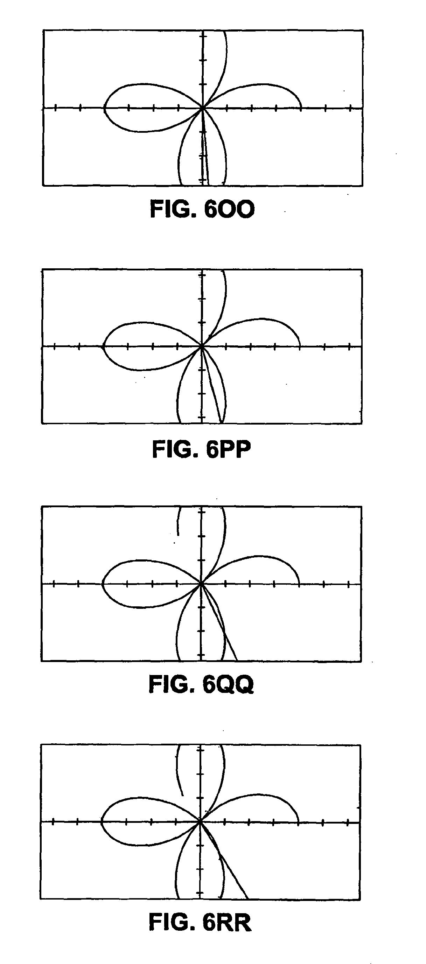

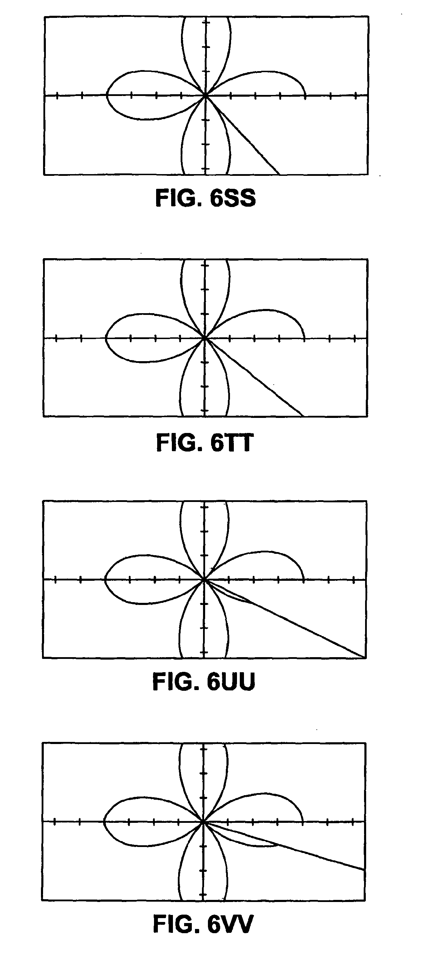

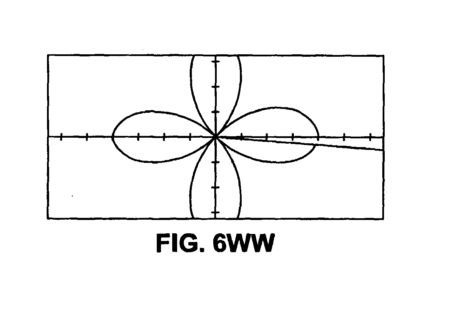

Figures 6a-6ww sequentially illustrate a sequence of steps in the animation process of graphing the function cos(2θ) while varying the angle θ. As depicted in the sequence, a line 602 (Figure 6e for example) is drawn from the origin 604 at an angle θ (indicated by reference numeral 606) and through a point 608. Point 608 is determined by the graphed function, i.e., cos(2θ), wherein the radius is equal to the value of the cosine of angle θ 606. Subsequent drawn lines on the polar plan "sweep" out the graph of the function in polar coordinates as the angle θ varies.

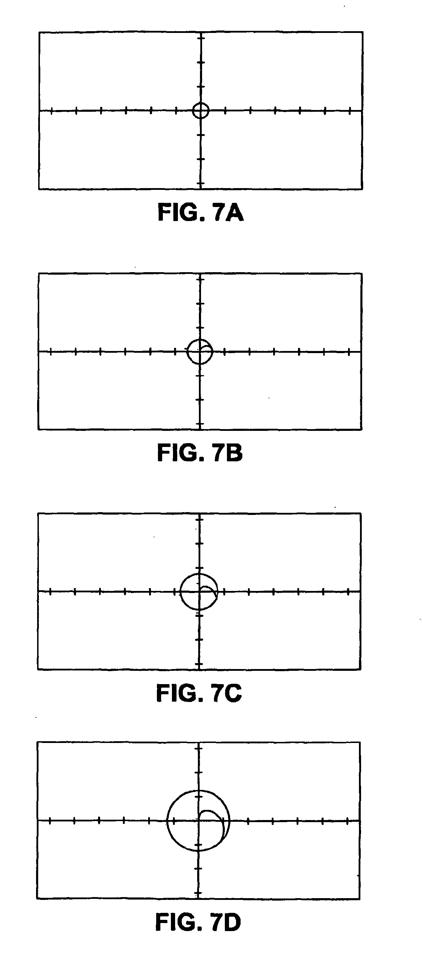

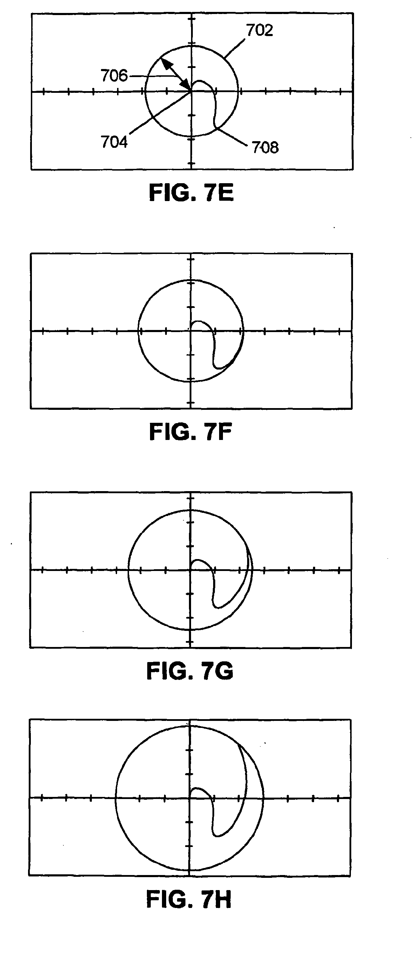

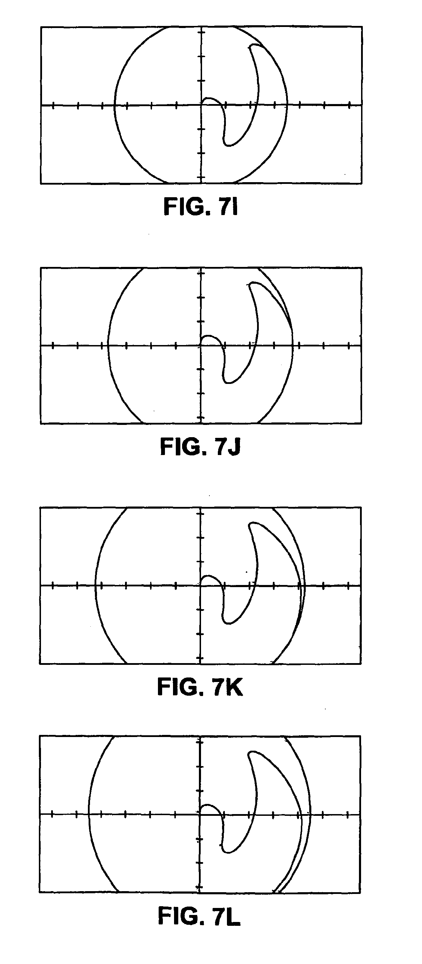

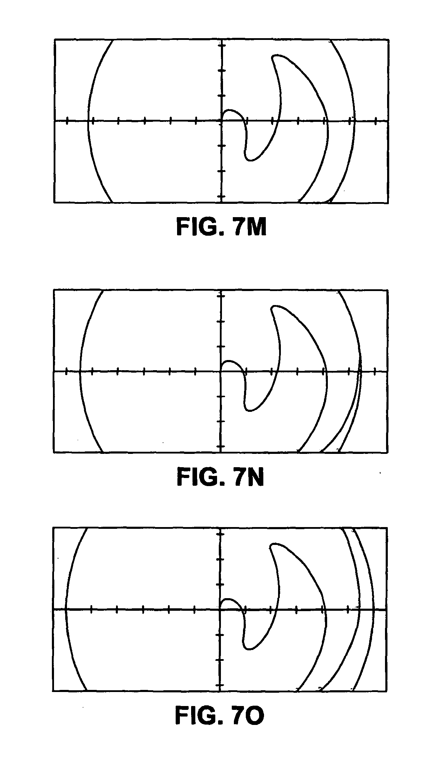

Figures 7a-7o sequentially illustrate a sequence of steps in the animation process of graphing the function cos(2R) while varying the radius R. As depicted in the sequence, a circle 702 (Figure 7e for example) is drawn at a radius from the origin (indicated by reference numeral 706) and through a point 708. Point 708 determined by the graphed function, i.e., cos(2R), wherein the angle is equal to the value of the cosine of radius R 708. Subsequent drawn lines on the polar plan "sweep" out the graph of the function in polar coordinates as the angle θ varies.

With respect to the animation of the display of the graphical representation of a user-entered expression described above, the user may further manipulate specified keys in order to input commands causing the calculator 100 to stop, resume, speed up or slow down the animation. Further, additional key manipulations by the user may cause the increase or decrease of scale and/or movement of the position of the origin point of the coordinate system on display 102.

A high level pseudo-code listing of an embodiment according to the present invention in which the angle θ is varied is listed in Listing 1 below.

### Listing 1

System detects user input of a polar equation based on the Theta (0) parameter.
For theta = 1 to 360 for all values of θ

| | |
|---|---|
| P2= (function(θ),θ); | calculate next point |
| Restore graphic(G) | restore old graphic |
| Line(P, P2); | draw the next step of the function |
| G= save graphic | save the graphic |
| Draw line ((0, 0), (function (θ), θ)) | display the sweep |
| P= P2; | save current point as start point for next loop. |

In Listing 1, P= (function(θ),θ), where function evaluates the user-entered expression for the value θ and returns the value of the R coordinate of the point. (R, θ) represents a polar point of coordinates R, θ. G= save the current display graphic in order to allow display of the sweeping line.

A high level pseudo-code listing of an embodiment according to the present invention in which the radius R is varied is listed in Listing 2 below.

### Listing 2

System detects user input of a polar equation based on the radius (R) parameter.
For R = 1 to 10
P2= (R, function(R));
Restore graphic(G)
Draw line from P to P2;
G= save graphic
Draw circle ((0, 0),R)display the sweep circle
P= P2;

In Listing 2, P= (R, function(R)), where function evaluates the user-entered expression for the value R and returns the value of the θ coordinate of the point. (R, θ) represents a polar point of coordinates R, θ. G= save the current display graphic in order to allow display of the sweeping line.

The skilled person will be able to devise various other embodiments from the teachings herein, all falling within the scope of the claims. For example, as depicted in Figures 1 and 3-5, key labels may differ according to different embodiments, e.g. the division key 128 in Figure 1 is represented by a slash mark whereas in Figures 3-5 the same key is represented by a + symbol. The symbols are interchangeable and represent the same calculator functionality.

The disclosures in United States patent application no. 10/636,781, from which this application claims priority, and in the abstract accompanying this application are incorporated herein by reference.

## Claims

1. A method of graphing a user-entered polar function expression on a calculator display (102) of a calculator (100), including the steps of:
in response to the calculator (100) only receiving as input the user-entered polar function expression to be graphed and a manipulation of the execute key, graphing the evaluation of the received user-entered polar function expression in a polar coordinate system on the calculator display (102), wherein the user-entered polar function expression includes a radius variable, the method including varying the radius variable to determine a series of angular values for graphing in the polar coordinate system, wherein the graphing step includes:
(i) displaying, on the polar coordinate system, a first circle having a radius from the origin of the polar coordinate system dependent on a first radius value and displaying a point of the graphed polar function on the first circle at an angle determined by the value of the user-entered polar function expression determined using the radius of the first circle;
(ii) clearing the display (102) of the displayed circle;
(iii) displaying, on the polar coordinate system, a further circle having a radius from the origin of the polar coordinate system dependent on a further radius value of the radius variable and displaying a further point of the graphed polar function on the further circle at an angle determined by the value of the user-entered polar function expression determined using the radius of the further circle; and,
repeating the step (ii) and (iii) for sequential radius values.

2. A calculator (100) for graphing a user-entered expression on a calculator display (102), the calculator including:
means for receiving and displaying a user-entered polar function expression;
means for graphing the evaluation of the received user-entered expression in a polar coordinate system on a calculator display (102) responsive to receiving only the user-entered polar function expression, wherein the user-entered polar function expression includes a radius variable, the means for graphing includes means for varying the radius variable to determine a series of angular values for graphing in the polar coordinate system
wherein the means for graphing includes:
means for displaying, on a polar coordinate system, a first circle having a radius from the origin of the polar coordinate system dependent on a first radius value of the radius variable and means displaying a point of the graphed polar function on the first circle at an angle determined by the value of the user-entered polar function expression determined using the radius of the first circle;
means for clearing the display (102) of the first circle;
means for displaying, on the polar coordinate system, a further circle having a radius from the origin of the polar coordinate system dependent on a further radius value of the radius variable and displaying a further point of the graphed polar function on the further circle at an angle determined by the value of the user-entered polar function expression determined using the radius of the further circle; and,
means for repeating the operation of the means for clearing and means for displaying a further circle for sequential radius values.

## Patentansprüche

1. Eine Methode zur grafischen Darstellung eines vom Benutzer eingegebenen polaren Funktionsterms in der Rechneranzeige (102) eines Rechners (100), welche die folgenden Schritte umfasst:
als Reaktion darauf, dass der Rechner (100) nur den vom Benutzer eingegebenen grafisch darzustellenden polaren Funktionsterm und die Betätigung der "Ausführen"-Taste als Eingabe erhält, die grafische Darstellung der Auswertung des empfangenen, vom Benutzer eingegebenen polaren Funktionsterms in einem polaren Koordinatensystem in der Rechneranzeige (102), wobei der vom Benutzer eingegebene polare Funktionsterm eine Radiusvariable enthält und die Methode die Variation der Radiusvariablen einschließt, um eine Reihe von Winkelwerten zur grafischen Darstellung in dem polaren Koordinatensystem zu ermitteln, wobei der Schritt zur grafischen Darstellung Folgendes umfasst:
(i) das Anzeigen eines ersten Kreises in dem polaren Koordinatensystem, mit einem Radius von dem Ursprung des Koordinatensystems in Abhängigkeit von einem ersten Radiuswert, und das Anzeigen eines Punkts der grafisch dargestellten polaren Funktion auf dem ersten Kreis in einem Winkel, der von dem Wert des vom Benutzer eingegebenen polaren Funktionsterms bestimmt wird, welcher anhand des Radius des ersten Kreises ermittelt wird;
(ii) das Löschen der Anzeige (102) des angezeigten Kreises;
(iii) das Anzeigen eines weiteren Kreises in dem polaren Koordinatensystem, mit einem Radius von dem Ursprung des Koordinatensystems in Abhängigkeit von einem weiteren Radiuswert der Radiusvariable, und das Anzeigen eines weiteren Punkts der grafisch dargestellten polaren Funktion auf dem weiteren Kreis in einem Winkel, der von dem Wert des vom Benutzer eingegebenen polaren Funktionsterms bestimmt wird, welcher anhand des Radius des weiteren Kreises ermittelt wird; und
das Wiederholen der Schritte (ii) und (iii) für aufeinanderfolgende Radiuswerte.

2. Ein Rechner (100) zur grafischen Darstellung eines vom Benutzer eingegebenen Terms in einer Rechneranzeige (102), wobei der Rechner Folgendes umfasst:
Mittel zum Empfangen und Anzeigen eines vom Benutzer eingegebenen polaren Funktionsterms;
Mittel zur grafischen Darstellung der Auswertung des empfangenen, vom Benutzer eingegebenen Terms in einem polaren Koordinatensystem in einer Rechneranzeige (102), als Reaktion auf den Empfang nur des vom Benutzer eingegebenen polaren Funktionsterms, wobei der vom Benutzer eingegebene polare Funktionsterm eine Radiusvariable enthält und das Mittel zur grafischen Darstellung Mittel zur Variation der Radiusvariable enthält, um eine Reihe von Winkelwerten für die grafische Darstellung in dem polaren Koordinatensystem zu bestimmen
wobei das Mittel für die grafische Darstellung Folgendes umfasst:
Mittel zum Anzeigen eines ersten Kreises in einem polaren Koordinatensystem, mit einem Radius von dem Ursprung des polaren Koordinatensystems in Abhängigkeit von einem ersten Radiuswert der Radiusvariable, und Mittel zum Anzeigen eines Punkts der grafisch dargestellten polaren Funktion auf dem ersten Kreis in einem Winkel, der von dem Wert des vom Benutzer eingegebenen polaren Funktionsterms bestimmt wird, welcher anhand des Radius des ersten Kreises ermittelt wird;
Mittel zum Löschen der Anzeige (102) des ersten Kreises;
Mittel zum Anzeigen eines weiteren Kreises in dem polaren Koordinatensystem, mit einem Radius von dem Ursprung des polaren Koordinatensystems in Abhängigkeit von einem weiteren Radiuswert der Radiusvariable, und zum Anzeigen eines weiteren Punkts der grafisch dargestellten polaren Funktion auf dem weiteren Kreis in einem Winkel, der von dem Wert des vom Benutzer eingegebenen polaren Funktionsterms bestimmt wird, welcher anhand des Radius des weiteren Kreises ermittelt wird;
und
Mittel zum Wiederholen des Arbeitsvorgangs der Mittel zum Löschen und Mittel zum Anzeigen eines weiteren Kreises für aufeinanderfolgende Radiuswerte.

## Revendications

1. Procédé de représentation graphique d'une expression de fonction polaire entrée par l'utilisateur sur un écran de calculateur (102) d'un calculateur (100), comprenant les étapes suivantes :
en réponse au calculateur (100) recevant uniquement, sous la forme de saisie, l'expression de fonction polaire entrée par l'utilisateur à représenter graphiquement et une manipulation de la touche d'exécution, en représentant graphiquement l'évaluation de l'expression de fonction polaire entrée par l'utilisateur reçue dans un système de coordonnées polaires sur l'écran du calculateur (102), dans lequel l'expression de fonction polaire entrée par l'utilisateur comprend une variable de rayon, le procédé comprenant la variation de la variable de rayon pour déterminer une série de valeurs angulaires à représenter graphiquement dans le système de coordonnées polaires, dans lequel l'étape de représentation graphique comprend :
(i) l'affichage, sur le système de coordonnées polaires, d'un premier cercle possédant un rayon à partir de l'origine du système de coordonnées polaires basé sur une première valeur de rayon et l'affichage d'un point de la fonction polaire représentée graphiquement sur le premier cercle à un angle déterminé par la valeur de l'expression de fonction polaire entrée par l'utilisateur déterminée à l'aide du rayon du premier cercle ;
(ii) la suppression de l'écran (102) du cercle affiché ;
(iii) l'affichage, sur le système de coordonnées polaires, d'un autre cercle possédant un rayon à partir de l'origine du système de coordonnées polaires basé sur une autre valeur de rayon de la variable de rayon et l'affichage d'un autre point de la fonction polaire représentée graphiquement sur l'autre cercle à un angle déterminé par la valeur de l'expression de fonction polaire entrée par l'utilisateur déterminée à l'aide du rayon de l'autre cercle ; et,
la répétition des étapes (ii) et (iii) pour les valeurs de rayon séquentielles.

2. Un calculateur (100) pour représenter graphiquement une expression entrée par l'utilisateur sur un écran de calculateur (102), le calculateur comprenant :
des moyens pour recevoir et afficher l'expression de fonction polaire entrée par l'utilisateur ;
des moyens pour représenter graphiquement l'évaluation de l'expression entrée par l'utilisateur dans un système de coordonnées polaires sur un écran de calculateur (102) en réponse à la réception uniquement de la fonction polaire entrée par l'utilisateur, dans lequel l'expression de fonction polaire entrée par l'utilisateur comprend une variable de rayon, les moyens de représentation graphique comprennent des moyens pour faire varier la variable de rayon afin de déterminer une série de valeurs angulaires à représenter graphiquement dans le système de coordonnées polaires
dans lequel les moyens de représentation graphique comprennent :
des moyens pour afficher, sur un système de coordonnées polaires, un premier cercle possédant un rayon à partir de l'origine du système de coordonnées polaires basé sur une première valeur de rayon de la variable de rayon et des moyens d'affichage d'un point de la fonction polaire représentée graphiquement sur le premier cercle à un angle déterminé par la valeur de l'expression de fonction polaire entrée par l'utilisateur déterminée à l'aide du rayon du premier cercle ;
des moyens de suppression de l'écran (102) du premier cercle ;
des moyens d'affichage, sur le système de coordonnées polaires, d'un autre cercle possédant un rayon à partir de l'origine du système de coordonnées polaires basé sur une autre valeur de rayon de la variable de rayon et l'affichage d'un autre point de la fonction polaire représentée graphiquement sur l'autre cercle à un angle déterminé par la valeur de l'expression de fonction polaire entrée par l'utilisateur déterminée à l'aide du rayon de l'autre cercle ; et,
des moyens pour répéter la mise en oeuvre des moyens de suppression et d'affichage d'un autre cercle pour les valeurs de rayon séquentielles.
